# EUROPEAN PATENT APPLICATION

(11) **EP 1 479 291 A1**
(43) Date of publication of application: **24.11.2004**
(21) Application number: 04252456.1
(22) Date of filing: 28.04.2004
(51) Int. Cl.: A01K 1/015

(54) **Discharged waste processing materials for animals**

(30) Priority: 19.05.2003 JP 2003140887
(71) Applicant: Mochizuki, Shotaro, Shizuoka-ken (JP)
(72) Inventor: Mochizuki, Shotaro, Shizuoka-ken (JP)
(74) Representative: Rees, Alexander Ellison

(57) **Abstract**

To provide a discharged waste processing material for animals having high water-absorbent properties and high water-retentive properties at a low cost, and to contribute to conservation of resources and preservation of environment. A discharged waste processing material for animals is characterized in that a crushed paper piece obtained by crushing a waste gypsum board with a base paper for a gypsum board bonded to an outer surface thereof and having a gypsum thin layer bound to one surface thereof is used as a base material, a cotton-like disaggregated material (3b) having particles (2d) of gypsum powder captured therein or a cotton-like disaggregated material (3b) having minute gypsum pieces (2c) bound therein is used as a composition, and the cotton-like disaggregated material (3b) is used either alone or mixed with other material, so that a granular or mat-like shape is applied thereto.

## Description

### BACKGROUND OF THE INVENTION

### [Field of the Invention]

This invention relates to a discharged waste processing material for animals in which a waste material of a gypsum board is used as a base material of an urine absorbent material.

### [Related Art]

A water-absorbent granulated material obtaining by granulating wood pulp, or a water-absorbent sheet having wood pulp included between a water permeating sheet and a water shielding sheet is widely sold.

As one representative example, Japanese Patent document 1 provides a water-absorbent granule obtained by blending inorganic fillers with wood pulp and adding some weight thereto.

Japanese Patent document 2 provides a discharged waste processing material for animals, in which a core part of a water-absorbent granule is formed by selectively blending inorganic fillers, starch and water-absorbent polymer with wood pulp, the core part is then dyed and the surface of the dyed core part is coated with pulp. Owing to this arrangement, when discharged urine is absorbed in the core part through the coating layer, a dye portion for dyeing the core part is infiltrated into the coating layer to dye it, so that after-use and before-use can be distinguished.

Moreover, Japanese Patent document 2 provides a discharged waste processing material for animals, in which when the discharged urine is absorbed through the coating layer, a water-insoluble pigment contained in the core part is seen through the coating layer so that after-use and before-use can be distinguished.

### [Japanese Patent Document 1]

Official Gazette of Japanese Patent Publication No. H03-8738 (Official Gazette of Japanese Patent Application Laid-Open No. HO1-25718)

### [Japanese Patent Document 2]

Official Gazette of Japanese Patent No. 2,534,031

Since the discharged waste processing materials of the above-mentioned Japanese Patent documents 1 and 2 contains inorganic filters, they have such operation and effects that granules are prevented from scattering with the result that the problems of attachment of the granules to cat hairs can effectively be solved.

However, feldspar, tale and calcium carbonate, which can be listed as the inorganic fillers, reduces the effect of absorbing property and thus reduces the original function as a discharged urine absorbing material.

The disposed waste processing material of this type is required to have a rapid water-absorbing property for absorbing a discharged urine instantaneously and a water-retentive property for retaining the discharged urine within the processing material. Wood pulp is excellent in water-retentive property but it lacks a sufficient rapid water-absorbing property. Urine tends to infiltrate in the processing material which is laid over a wide surface area of a commode (or tray). This is economically inefficient.

The present invention provides a discharged waste processing material for animals, in which a waste gypsum board with a base paper for a gypsum board bonded to its surface is utilized.

According to a first aspect of the present invention, a crushed paper piece with a base paper for a gypsum board bonded to one surface thereof is formed, and a pulverized material of the crushed paper piece thus obtained is utilized as a urine absorbing material. The pulverized material is composed of a cotton-like disaggregated material having particles of gypsum powder captured therein or a cotton-like disaggregated material having a minute gypsum piece bound therein. The cotton-like disaggregated material is used either alone or mixed with other material, so that a granular or mat-like shape is applied thereto.

According to a second aspect of the present invention, there is provided a discharged waste processing material for animals, in which a crushed material obtained by directly crushing a waste gypsum board is used as a urine-absorbent material, and in the same manner as mentioned above, the crushed material is comprised of a cotton-like disaggregated material in which a base paper for a gypsum board is disaggregated in a cotton-like shape and having particles of gypsum powder captured therein or a cotton-like disaggregated material having a minute gypsum piece bound therein, and the cotton-like disaggregated material is used either alone or mixed with other material, so that a granular or mat-like shape is applied thereto.

According to a third aspect of the present invention, there is provided a discharged waste processing material for animals, in which a crushed paper piece obtained by crushing the above-mentioned waste gypsum board and having a gypsum thin layer bound to one surface thereof is used as a base material, a minute paper piece obtained by cutting the crushed paper piece and having a gypsum thin layer bound to one surface thereof is used either alone or mixed with other material, so that a granular or mat-like shape is applied thereto.

According to a fourth aspect of the present invention, there is provided a discharged waste processing material for animals, in which a minute paper piece obtained by directly cutting a waste gypsum board and having a minute gypsum piece bonded to one surface is used either alone or mixed with other material, so that a granular or mat-like shape is applied thereto.

According to a fifth aspect of the present invention, there is provided a discharged waste processing material for animals, in which a crushed paper piece obtained by crushing the above-mentioned waste gypsum board and having a gypsum thin layer bound to one surface thereof is used as a base material, a cotton-like disaggregated material having particles of gypsum powder captured therein or a cotton-like disaggregated material having a minute gypsum piece bound therein is used as a composition, and the cotton-like disaggregated material is used either alone or mixed with other material and enclosed between a water-permeating sheet and a water-shielding sheet.

The gypsum board is widely used as a wall for buildings and a ground material for ceilings, in other words, as a heat insulating material or sound-proof material. A large amount of waste material is generated in accordance with destruction of buildings.

Those gypsum boards are separated by a crushing machine into gypsum and paper. Then, after removing the gypsum portion bonded thereto, the paper is subjected to incineration treatment.

On the other hand, the crushed gypsum board is attempted to be reused as a base material of a gypsum board, cement or the like after crushed paper pieces mixed therein are removed. But the most of part of such gypsum board is discarded to the industrial waste disposing site.

A base paper for a gypsum board is bonded to the outer surface of the waste gypsum board. This base paper is firmly jointed to the gypsum. Accordingly, the crushed paper piece obtained by crushing the gypsum board has a composite structure in which a gypsum thin layer remains on one surface thereof.

Owing to this feature, the cotton-like disaggregated material obtained by crushing the crushed paper pieces or the minute paper pieces obtained by cutting the crushed paper pieces surely have the minute gypsum pieces or gypsum powders.

According to the present invention, there is provided a discharged waste processing material for animals, which has a good rapid absorbent-property and a good water-retentive property, by paying attention to the composite structure in which the paper and the gypsum are firmly jointed together and using the same as a water-absorbent material. Thus, there can be provided a discharged waste processing material for animals at a low cost. In addition, the present invention can contribute to conservation of resources and preservation of environment.

The crushed material obtained by crushing the crushed paper pieces or the crushed material obtained by crushing the waste gypsum board has a composite structure in which a cotton-like disaggregated material obtained by disaggregating paper fibers and minute gypsum pieces are jointed together, or a disaggregated structure in which the cotton-like disaggregated material obtained by disaggregating paper fibers captures therein gypsum powders. By compensation of those two composite structures, it becomes possible to exhibit the rapid water-absorbent property and the water-retentive property which are required for the discharged waste processing material for animals.

Similarly, the minute paper pieces obtained by cutting the crushed paper pieces having the above-mentioned composite structure, or the minute paper pieces obtained by directly cutting the waste gypsum board have a composite structure in which the minute paper pieces are firmly jointed with the minute gypsum pieces. By compensation of those two composite structures, it becomes possible to exhibit the rapid water-absorbent property and the water-retentive property which are required for the discharged waste processing material for animals.

That is, the gypsum is rich in rapid water-absorbent property and capable of immediately absorbing the discharged urine with the gypsum. On the other hand, the paper itself is capable of absorbing water and it can also exhibit a favorable water-retentive property, thus compensating the low water-retentive property which the gypsum has. Owing to those features, they are suitable to be used as a discharged waste processing material for animals.

The above-mentioned rapid water-absorbent property and water-retentive property can properly be achieved by the composite structure in which the cotton-like disaggregated material or minute paper pieces obtainable from a waste gypsum board are firmly jointed with minute gypsum pieces, or by the composite structure in which the cotton-like disaggregated material captures therein gypsum powders. In addition, owing to characteristics of gypsum, a deodoring effect of urine can be expected.

### BRIEF DESCRIPTION OF THE DRAWINGS

FIG. 1 is a sectional view of a waste gypsum board.
FIG. 2 is an enlarged sectional view showing a crushed state of the waste gypsum board.
FIG. 3(A) is a plan view, partly cut-away, showing a crushed paper piece obtained by crushing the waste gypsum board.
FIG. 3(B) is a sectional view of the crushed paper piece.
FIG. 4(A) is an enlarged view showing a composite structure of a cotton-like disaggregated material obtained by pulverizing the crushed paper piece.
FIG. 4(B) is an enlarged view showing another composite structure of a cotton-like disaggregated material.
FIG. 4(C) is an enlarged view of pulp fibers composing a cotton-like disaggregated material.
FIG. 5 (A) is an enlarged plan view of minute paper pieces obtained by cutting the crushed paper piece.
FIG. 5(B) is an enlarged sectional view of the above minute paper pieces.
FIG. 6(A) is a sectional view of a water-absorbent granule having the above cotton-like disaggregated material or minute paper pieces as its composition.
FIG. 6(B) is a sectional view of a water-absorbent granule with a water-absorbent coating layer formed thereon.
FIG. 7 is a sectional view of a water-absorbent mat having the above cotton-like disaggregated material or minute paper pieces as its composition
FIG. 8 is a sectional view of a water-absorbent sheet containing the cotton-like disaggregated material or minute paper pieces.

### DETAILED DESCRIPTION OF THE EMBODIMENTS

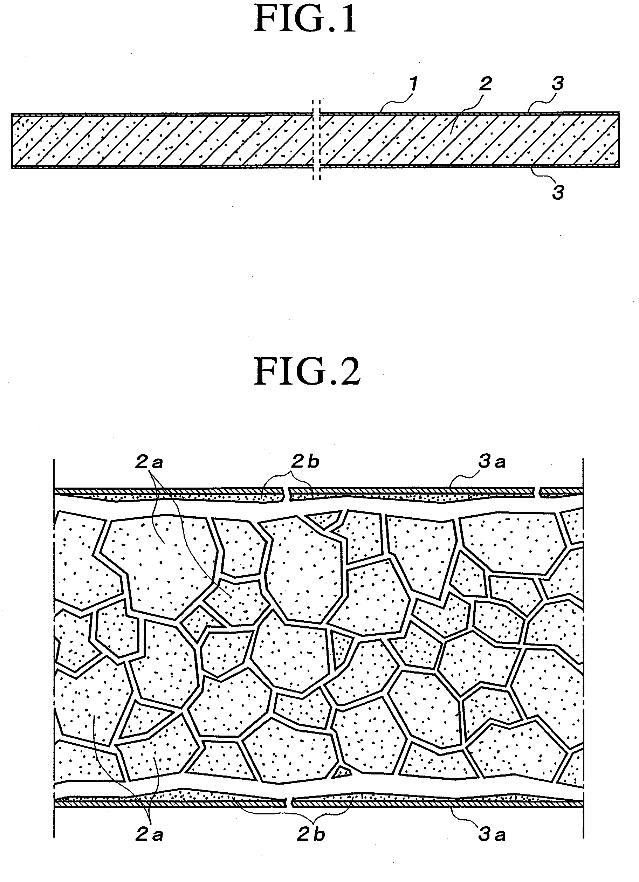

Some embodiments of a discharged waste processing material for animals according to the present invention will now be described with reference to FIGS. 1 through 8.

As shown in FIG. 1, a gypsum board 1 discharged as industrial waste has such a construction that a reinforcement base paper 3 for a gypsum board is bonded to an opposing surface of the gypsum board 2. This gypsum board 1 has such a construction that a gypsum portion is oozed into fibers of the base paper 3 and firmly jointed together.

Waste material of the gypsum board 1 is charged into a crushing machine where the waste material the gypsum 2 and gypsum board 3 are crushed into small pieces altogether. With progress of the crushing operation, most part of the crushed gypsum 2a is forcibly separated from the crushed paper pieces 3a.

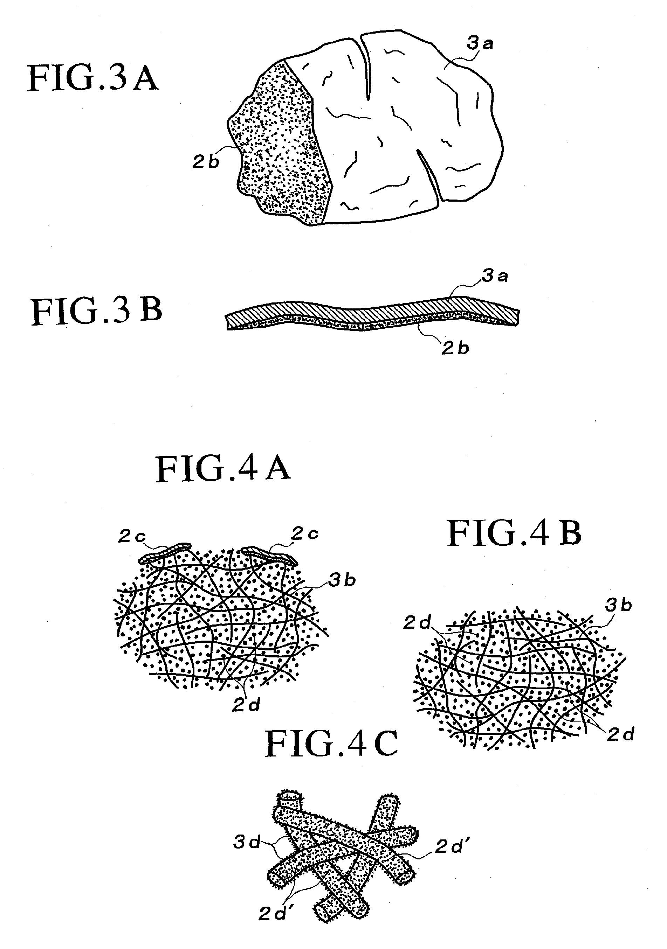

As shown in FIGS. 2 and 3, a gypsum thin layer 2b is remained on a single surface of each crushed paper piece 3 a which is forcibly separated from the crushed gypsums 2a and this gypsum thin layer 2b has a composite structure in which the layer 2b is firmly bound to the crushed paper 3a. The crushed paper pieces 3a can easily and inexpensively be obtained from waste processing sites.

The crushed paper pieces 3a with the gypsum thin layer 2b attached thereto are charged into a known crushing machine as represented by a hammer crusher.

In the alternative, the waste gypsum board 1 is charged directly into the crushing machine and crushed.

By the above-mentioned crushing, as shown in FIG. 4(A), there can be obtained a cotton-like disaggregated material in which the fibers of the crushed paper pieces 3a or pulp fibers of the base paper 3 of the waste gypsum board 1 are disaggregated and minute gypsum pieces 2c are bound.

In the alternative, as shown in FIG. 4(B), by the above-mentioned crushing, the fibers of the crushed paper pieces 3a or the pulp fibers of the base paper 3 of the waste gypsum board 1 are disaggregated and particles 2d of the gypsum powders are generally uniformly captured therein.

Still in the alternative, as shown in FIG. 4(C), by the above-mentioned crushing, gypsum powders 2d' are sprinkled over the outer peripheral surface of each pulp fiber 3d which constitutes the disaggregated material 3b.

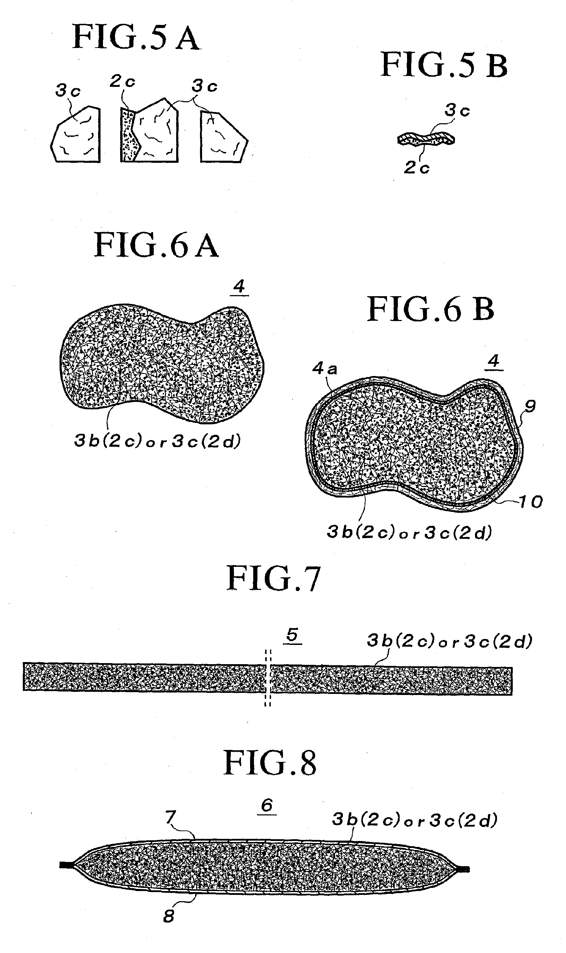

A discharged waste processing material for animals is formed by serving the cotton-like disaggregated material 3b as a composition. That is, as shown in FIGS. 6(A) and 6(B), the cotton-like disaggregated material 3b, either alone or mixed with other material, is charged into a granulating machine and press-granulated to obtain a water-absorbent granule 4. The granule 4 thus obtained is used as the discharged waste processing material for animals.

Yet in the alternative, as shown in FIG. 7, the cotton-like disaggregated material 3b, either along or mixed with other material, is charged into a pressing machine and press-shaped into a plate-like shape in order to obtain a water-absorbent mat 5. The mat 5 thus obtained is used as the discharged waste processing material for animals.

One example will be described next, in which the minute paper pieces 3c obtained by cutting the crushed paper pieces 3a or waste gypsum board 1 is served as a composition of the discharged waste processing material for animals.

As previously described, the gypsum 2 and the base paper 3 for a gypsum board are minutely crushed together. In accordance with the crushing operation, the most part of the crushed gypsum 2a is forcibly separated from the crushed paper pieces 3a.

As shown in FIGS. 2 and 3, the gypsum thin layer 2b remains on one surfaces of the crushed paper pieces 3a forcibly separated from the crushed gypsum 2a, and this gypsum thin layer 2b has a composite structure in which the layer 2b is firmly bound to the crushed papers 3a.

The crushed paper pieces 3a with the gypsum thin layer 2b bound thereto are cut into minute pieces with a known cutter to obtain the minute paper pieces 3c as shown in FIGS. 5(A) and 5(B).

In the alternative, the waste gypsum board 1 is directly cut by the cutter to obtain the minute paper piece 3c.

Although the individual minute paper pieces 3c are different in size from the crushed paper pieces 3a, but they have a composite structure as in the case with the crushed paper pieces 3a, in which the minute gypsum pieces 2c are firmly bound to one surfaces thereof.

As shown in FIGS. 6(A) and 6(B), the minute paper piece 3c, either alone or mixed with other material, is charged to a granulating machine and press-granulated to obtain the water-absorbent granule 4. The water-absorbent granule 4 thus obtained is used as the discharged waste processing material for animals.

In the alternative, as shown in FIG. 7, the fine paper pieces 3c are used, either alone or mixed with other material, and pressed with a pressing machine into a plate-like shape in order to obtain a water-absorbent mat 5. The mat 5 thus obtained is used as the discharged waste processing material for animals.

In addition to the example in which the cotton-like disaggregated material 3b or minute paper pieces 3c are used as a composition in order to form the water-absorbent granule 4 or water-absorbent mat 5, the cotton-like disaggregated material 3b or minute paper pieces 3c may be used as a composition in order to form a water-absorbent sheet 6 containing the cotton-like disaggregated material 3b or minute paper pieces 3c.

That is, as shown in FIG. 8, the cotton-like disaggregated material 3b or minute paper piece 3c is used either alone or mixed with other material, the resultant is enclosed between a water-permeating sheet 7 and a water-shielding sheet 8, and end edges of the sheets 7, 8 are tightly closed to form the water-absorbent sheet 6.

As mentioned above, the cotton-like disaggregated material 3b or minute paper piece 3c is used either alone or mixed with other material so that the water-absorbent granule 4, the water-absorbent mat 5 and the water-absorbent sheet 6 can be formed.

As the mixing material, at least one of vegetable viscous materials such as starch, CMS (carboxyl-methyl starch), and CMC (carboxyl-methyl cellulose) is used. In the alternative, those vegetable viscous materials and water-absorbent polymer as a water-retentive material are used in combination.

As a preferred example, a collected material of the cotton-like disaggregated material 3b or minute paper pieces 3c is mixed with starch, CMS or CMC. The mixture thus obtained is added with a small amount of water by spraying or the like, and then agitated. The resultant is compressed and granulated by a known pressing machine, and then dried to obtain the water-absorbent material 4.

Similarly, a collected material of the cotton-like disaggregated material 3b or minute paper pieces 3c is mixed with starch, CMS or CMC. The mixture thus obtained is added with a small amount of water by spraying or the like, and then agitated. The resultant is compressed by a known pressing machine, and then dried to obtain the water-absorbent mat 5.

A vegetable viscous material as represented by the above-mentioned starch is caused to exhibit a viscous property by the small amount of water applied thereto. This material is used as a binder for mutually binding the cotton-like disaggregated material 3b or minute paper pieces 3c to retain the granular shape or mat shape.

In the alternative, a collected material of the cotton-like disaggregated material 3b or minute paper pieces 3c is mixed with a water-absorbent polymer. The mixture thus obtained is enclosed between the water-permeating sheet 7 and the water-shielding sheet 8, thereby forming the water-absorbent sheet 6.

The starch, CMS, CMC, and the water-absorbent polymer has a rich water-absorbent property, while the starch, CMS and CMC, when water is absorbed therein, exhibit a viscous property and causes the water-absorbent granules 4 in a lump fashion, thus functioning as a coagulating material.

That is, many water-absorbent granules 4 are laid in a commode such as a tray so that cats, etc. can use them for discharging urine therein. The water-absorbent granules 4, which have absorbed urine, are mutually viscously adhered in a limited range so as to form the shape of a lump. The user takes this lump-shaped portion of the granules 4 out of the commode and flushed in a flush toilet. Then, new water-absorbent granules are laid in the commode so as to be subject to next use of animals.

In the alternative, a collected material of the cotton-like disaggregated material 3b or minute paper pieces 3c are mixed with a vegetable viscous material as represented by starch and a water-absorbent polymer as a water-retentive material in order to form the water-absorbent granule 4 and the water-absorbent mat 5.

As known, the water-absorbent polymer consisting of starch-polyacrylonitrile hydrolyzed material, cross-linked material of starch-polyacrylate, saponified vinyl acetate-methylacrylate copolymer, cross-linked material of sodium polyacrylate and the like, when water contained in the discharged waste is absorbed therein, is changed in quality in a form like gelatin and becomes enable to retain a large quantity of water, thus functioning as a water-retentive material. Due to mixture of this water-absorbent polymer, the water contained in the discharged waste can be prevented from spreading over a wide range of area.

In case the water-absorbent granule 4 is formed by using the cotton-like disaggregated material 3b or minute paper pieces 3c as a main material, a water-absorbent coating layer 9 can be formed on the granule 4 as shown in FIG. 6(B).

The water-absorbent coating layer 9 uses, as in the case of the core part 4a, the cotton-like disaggregated material 3b or minute paper pieces 3c as a composition. Preferably, the cotton-like disaggregated material 3b or minute paper pieces 3c are selectively blended with starch, CMS, CMC and water-absorbent polymer in order to form the coating layer 9.

The core part 4a of the water-absorbent granule 4 is highly densely press-granulated so that the cotton-like disaggregated material 3b or minute paper pieces 3c, or a mixture of the material 3b or pieces 3c and the starch or CMS or CMC or water-base polymer is sprinkled over the core part 4a in order to form a water-absorbent coating layer 9 having a low density.

This water-absorbent coating layer 9 exhibits a rapid water-absorbent property because it contains gypsum powders or minute gypsum pieces which are carried on the cotton-like disaggregated material 3b or minute paper pieces 3c.

The water-absorbent material such as the water-absorbent granule 4, the water-absorbent mat 5 and the water-absorbent sheet 6 may be blended with an anti-bacterial agent and a deodorant.

It is also accepted that the water-absorbent material such as the water-absorbent granule 4, the water-absorbent mat 5 and the water-absorbent sheet 6 are blended with a weight adding material such as calcium carbonate, talc and clay.

It is also accepted that other vegetable fibers such as pulp fibers, minute paper pieces or wood powders which are not obtained from a waste gypsum board are blended together with the cotton-like disaggregated material 3b or the minute paper pieces 3c.

The water-absorbent granule 4 with no coating layer 9 formed thereon as shown in FIG. 6(A), or the core part 4a of the water-absorbent granule 4 as shown in FIG. 6(B) may contain therein dyes or pigments.

It is also accepted that dyes or pigments are coated on the outer peripheral surface of the core part 4 as shown in FIG. 6(B) and the coating layer 10 is covered with the above-mentioned coating layer 9.

When the water-absorbent granule 4 absorbs discharged urine, the granule 4 is colored with the dyes or pigments so as to make it possible to recognize that the granule 4 is used.

The cotton-like disaggregated material 3b or the minute paper pieces 3c as a composite with the gypsum ingredient, particularly the gypsum ingredient as described hereinbefore renders a rapid water-absorbent property to the water-absorbent granule 4, the water-absorbent mat 5 and the water-absorbent sheet 6, and the paper ingredient exhibits a water-retentive property. Thus, the cotton-like disaggregated material 3b or the minute paper pieces 3c can give such a suitable property as a discharged waste processing material for animals to the water-absorbent granule 4, etc.

In addition, the present invention can provide a discharged waste processing material for animals at a low cost and it can contribute to conservation of resources and preservation of environment.

## Claims

1. A discharged waste processing material for animals **characterized in that** a crushed paper piece obtained by crushing a waste gypsum board with a base paper for a gypsum board bonded to an outer surface thereof and having a gypsum thin layer bound to one surface thereof is used as a base material; a cotton-like disaggregated material having particles of gypsum powder captured therein or a cotton-like disaggregated material having a minute gypsum piece bound therein is used as a composition; and said cotton-like disaggregated material is used either alone or mixed with other material, so that a granular or mat-like shape is applied thereto.

2. A discharged waste processing material for animals **characterized in that** a crushed material obtained by crushing a waste gypsum board with a base paper for a gypsum board bonded to an outer surface thereof is used as a composition; said crushed material is comprised of a cotton-like disaggregated material in which a base paper for a gypsum board is disaggregated in a cotton-like shape and having particles of gypsum powder captured therein or a cotton-like disaggregated material having a minute gypsum piece bound therein; and said cotton-like disaggregated material is used either alone or mixed with other material, so that a granular or mat-like shape is applied thereto.

3. A discharged waste processing material for animals **characterized in that** a crushed paper piece obtained by crushing a waste gypsum board with a base paper for a gypsum board bonded to an outer surface thereof and having a gypsum thin layer bound to one surface thereof is used as a base material; a minute paper piece obtained by cutting said crushed paper piece and having a gypsum thin layer bound to one surface thereof is used as a composition; and said minute paper piece is used either alone or mixed with other material, so that a granular or mat-like shape is applied thereto.

4. A discharged waste processing material for animals **characterized in that** a minute paper piece obtained by cutting a waste gypsum board with a base paper for a gypsum board bonded to an outer surface thereof is used as a composition; said minute paper piece has such a construction that a minute gypsum piece is bound to one surface thereof; and said minute paper piece is used either alone or mixed with other material, so that a granular or mat-like shape is applied thereto.

5. A discharged waste processing material for animals **characterized in that** a crushed paper piece obtained by crushing a waste gypsum board with a base paper for a gypsum board bonded to an outer surface thereof and having a gypsum thin layer bound to one surface thereof is used as a base material; a cotton-like disaggregated material having particles of gypsum powder captured therein or a cotton-like disaggregated material having a minute gypsum piece bound therein is used as a composition; and said cotton-like disaggregated material is used either alone or mixed with other material and enclosed between a water-permeating sheet and a water-shielding sheet.
